## Europäisches Patentamt

## European Patent Office

## Office européen des brevets

(19)

(11) Numéro de publication: **0 213 030**
**B1**

(12) **FASCICULE DE BREVET EUROPEEN**

(45) Date de publication du fascicule du brevet: **26.09.90**

(21) Numéro de dépôt: **86401735.5**

(22) Date de dépôt: **01.08.86**

(51) Int. Cl.⁵: **C 09 K 17/00, C 04 B 41/65, C 04 B 28/26** // (C04B28/26, 22:06),(C04B28/26, 22:10)

(54) Procédé pour l'étanchéification des sols et produits pour la mise en oeuvre de ce procédé.

(30) Priorité: **01.08.85 FR 8511773**

(43) Date de publication de la demande:
**04.03.87 Bulletin 87/10**

(45) Mention de la délivrance du brevet:
**26.09.90 Bulletin 90/39**

(84) Etats contractants désignés:
**AT BE CH DE GB IT LI NL SE**

(56) Documents cités:
**DE-A-3 218 271**
**FR-A-1 347 791**
**FR-A-1 479 181**
**FR-A-2 528 441**
**NL-A- 291 298**
**US-A-3 908 388**
**US-A-4 293 097**

(73) Titulaire: **SOLETANCHE Société Anonyme dite:**
**6 rue de Watford**
**F-92005 Nanterre (FR)**

(72) Inventeur: **Gouvenot, Daniel**
**1, Allée Gambetta**
**F-92110 Clichy (FR)**

(74) Mandataire: **Geismar, Thierry et al**
**Cabinet Nony 29, rue Cambacérès**
**F-75008 Paris (FR)**

Courier Press, Leamington Spa, England.

EP 0 213 030 B1

### Description

La présente invention est relative à un procédé pour réaliser l'étanchéification des sols et des matériaux tels que mortiers, liants, bétons etc... qui ont déjà été mis en oeuvre et qui se révèlent comporter une porosité telle qu'ils ne sont pas étanches.

On connaît déjà des procédés pour réaliser l'étanchéification de tels matériaux qui consistent à injecter dans lesdits matériaux au sol, une liqueur de silice telle que celle décrite dans le brevet luxembourgeois No. 84.196 dont le rapport $SiO_2/Na_2O$ peut être par exemple inférieur à 2 de préférence compris entre 1,5 et 1,8.

Dans le cas où l'injection se fait dans des sols ou des matériaux pauvres en chaux ou en calcium, il est nécessaire dans la pratique de procéder, préalablement à l'injection de la liqueur de silice, à une injection de sels de calcium constituée par exemple par un chlorure de calcium soluble dans l'eau.

Il a été également proposé de mélanger ces sels solubles de calcium à la liqueur de silice, mais la réaction entre ces sels solubles de calcium et la liqueur de silice s'effectue généralement en moins de 10 minutes de sorte que le mélange, avant l'injection n'est guère praticable, ce qui impose dans la pratique d'opérer en deux phases et complique la mise en oeuvre du procédé tout en créant une incertitude sur la qualité de l'étanchéité obtenue, en raison du fait que si la liqueur de silice et le sel de calcium ne se trouvent pas en présence à chaque endroit du sol à étanchéifier, l'étanchéité risque d'être imparfaite.

Le document NL-A-291 298 décrit un mélange de verre soluble et d'oxyde de calcium finement broyé qui ne présente pas les caractéristiques de la composition selon l'invention et qui ne permet pas de mettre en oeuvre le procédé selon l'invention en raison du fait que ce document n'indique pas le rapport $SiO_2/Na_2$ ainsi que la solubilité dans l'eau du composé contenant le calcium qui sont les caractéristiques de l'invention.

La présente invention est relative à un procédé et à des matériaux pour sa mise en oeuvre qui permettent de réaliser l'étanchéification d'un sol ou d'autres matériaux poreux grâce à l'injection d'un produit unique qui effectue sa prise en plus d'une heure après l'injection en permettant d'obtenir une étanchéité fiable et économique.

La présente invention a pour objet un procédé pour réaliser l'étanchéification d'un sol ou d'un matériau tel qu'un mortier, un liant ou un béton à l'aide de l'injection d'une liqueur de silice, caractérisé par le fait qu'avant l'injection on mélange à la liqueur de silice, dont le rapport $SiO_2/Na_2O$ est compris entre 1 et 1,3 une poudre finement broyée d'un composé contenant du calcium dont la solubilité dans l'eau est comprise entre environ 0,01 par litre et environ 2 g par litre.

Conformément à l'invention, on peut utiliser comme poudre de composé contenant du calcium une poudre finement divisée de carbonate de calcium ($CaCO_3$) constituée par exemple par un marbre, un calcaire ou de la calcite finement broyée. On peut également utiliser de la poudre de chaux($Ca(OH)_2$). La granulomètrie de la poudre contenant le calcium est fonction de la taille des interstices qui existent dans le matériau qui doit être rendu étanche.

Conformément à l'invention, l'on peut obtenir la poudre de composé contenant du calcium à la granulomètrie voulue en procédant à un broyage de marbre, de calcite ou de craie. Dans le cas où ce broyage ne permet pas d'obtenir des particules inférieures à une dimension donnée, on procède à la mise en suspension de cette poudre dans l'eau en y ajoutant un agent défloculant constitué par exemple par un composé de type naphtalène, et en laissant reposer cette suspension dans un bac de décantation pendant un temps approprié la partie surnageante constituant la suspension de particules de composés à base de calcium qu'il est possible d'utiliser conformément à l'invention.

La défloculation peut également être obtenue par voie physique: ultra-sons, vibration etc...

Conformément à l'invention, on utilise une liqueur de silice dans laquelle le rapport $SiO_2/Na_2O$ est compris entre environ 1 et 1,3, la teneur en $SiO_2$ étant de préférence comprise entre 10 et 20% et la teneur en $Na_2O$ étant de préférence comprise entre 10 et 15%.

Lorsque le mélange de liqueur de silice et de poudre de composés contenant du calcium est injecté dans le sol, les ions $Ca++$ se libèrent progressivement par hydrolyse et réagissent avec la liqueur de silice pour former des silicates de chaux hydratés. Par déplacement de l'équilibre chimique, le captage de ces ions $Ca++$ permet une nouvelle libération de nouveaux ions par hydrolyse, ce qui permet de substituer à une réaction brutale et rapide, une réaction progressive qui s'étale sur plusieurs heures et qui permet de mettre en oeuvre le procédé selon l'invention.

La présente invention a également pour objet une composition destinée à être injectée dans les sols ou les matériaux tels que des mortiers, des liants, ou des bétons, dans le but de les rendre étanches, cette composition étant caractérisée par le fait qu'elle comporte en combinaison une liqueur de silice dont le rapport $SiO_2/Na_2O$ est compris entre 1 et 1,3 et une poudre finement divisée d'un matériau contenant du calcium dont la solubilité dans l'eau est comprise environ entre 0,01 et 2 g par litre.

Conformément à l'invention, on peut obtenir des temps de prise qui permettent une injection facile du mélange et qui sont généralement compris entre 1 heure et 12 heures.

Le temps de prise peut être réglé en agissant sur la solubilité du composé à base de Ca que l'on choisit, étant entendu que le temps de prise varie en sens inverse de la solubilité du composé à base de calcium.

Le temps de prise est également fonction du rapport $SiO_2/Na_2O$ et il varie dans le même sens que ce rapport. Toutefois, si le rapport $SiO_2/Na_2O$ est supérieur à environ 1,3, il se produit une mauvaise cristallisation de la silice et si ce rapport est inférieur à 1, la résistance mécanique est insuffisante et le résultat recherché n'est pas obtenu.

Dans le but de mieux faire comprendre l'invention, on va en décrire maintenant à titre d'illustration et sans aucun caractère limitatif plusieurs modes de mise en oeuvre donnés dans les exemples ci-après:

Exemple I

Pour réaliser l'étanchéification par injection d'un sable fin, on prépare tout d'abord une suspension de poudre de CaCO₃ constituée par du marbre, du calcaire ou de la calcite finement broyée. Cette poudre a une solubilité dans l'eau d'environ 0,01 g par litre.

Pour ce faire, on mélange à 1000 litres d'eau, de 200 à 500 kg de poudre de carbonate de calcium ayant une granulomètrie initiale inférieure à 50 microns.

On ajoute à la suspension un agent défloculant constitué par exemple par un composé de type naphtalène.

On laisse sédimenter pendant trois quart d'heure à une heure et après ce temps de sédimentation, la poudre qui se trouve en suspension dans le liquide surnageant, a une granulomètrie inférieure à 10 microns.

On prépare ensuite de manière conventionnelle une liqueur de silice dans laquelle le rapport $SiO_2/Na_2O$ est environ égal à 1.

On procède au mélange de la suspension de carbonate de calcium avec la liqueur de silice à raison d'un volume de suspension de carbonate de calcium pour 0,5 à 1,5 volume de liqueur de silice.

On obtient une composition qui reste très fluide.

Cette composition est injectée sous pression par une technique conventionnelle dans le sable fin qui après quelques heures, devient étanche et résistant.

Le temps de prise est d'environ 1 à 3 heures.

L'analyse permet de détecter des silicates de chaux dans les pores du sable.

Exemple II

On procède comme indiqué à l'exemple I mais avec une liqueur de silice dont le rapport $SiO_2/Na_2O$ est de 1,3.

Dans ce cas, le temps de prise est compris entre 2 et 10 heures.

Exemple III

On procède comme indiqué à l'exemple I mais en utilisant au lieu de marbre, de calcaire ou de calcite de la poudre de chaux $(CA(OH_2))$ à raison d'environ 100 à 300 kg pour 1000 litres d'eau.

Dans ce cas le temps de prise est compris entre 30 minutes et 2 heures.

Il est bien entendu que le mode de mise en oeuvre qui a été décrit ci-dessus ne présente aucun caractère limitatif et qu'il pourra recevoir toute modification désirable sans sortir pour cela du cadre de l'invention.

En particulier, il est possible d'utiliser différents types de liqueur de silice.

De même, les agents contenant le calcium peuvent être autres que des poudres de carbonate de calcium, à condition que ces composés libèrent par hydrolyse progressivement des ions calcium dans la liqueur de silice de manière à obtenir une réaction progressive.

**Revendications**

1. Procédé pour realiser l'étanchéification d'un sol ou d'un materiau tel qu'un mortier, un liant ou un béton, à l'aide de l'injection de liqueur de silice, caractérisé par le fait qu'avant l'injection, on mélange à la liqueur de silice dont le rapport $SiO_2/Na_2O$ est compris entre 1 et 1,3 une poudre finement broyée d'un composé contenant du calcium ayant une solubilité dans l'eau comprise environ entre 0,01 et 2 g par litre.

2. Procédé selon la revendication 1, caractérisé par le fait que le composé contenant du calcium est une poudre de carbonate de calcium $(CaCO_3)$, constituée par exemple par un marbre, un calcaire ou de la calcite.

3. Procédé selon la revendication 1, caractérisé par le fait que le composé contenant du calcium est de la poudre de chaux $(Ca(OH)_2)$.

4. Procédé selon l'une quelconque des revendications précédentes, caractérisé par le fait que pour obtenir la poudre de composé contenant du calcium destinée à être mélangée à la liqueur de silice, on place les particules broyées en suspension dans l'eau en y ajoutant un agent défloculant tel qu'un composé de type naphtalène et qu'on laisse reposer cette suspension dans un bac de décantation pendant un temps suffisant pour que la partie surnageante ne contienne que des particules de dimension inférieure à la dimension maximale souhaitée.

5. Composition destinée à être injectée dans les sols ou les matériaux tels que les mortiers, liants, ou bétons dans le but de les rendre étanches, caractérisée par le fait qu'elle contient en combinaison une liqueur de silice dont le rapport $SiO_2/Na_2O$ est compris entre 1 et 1,3 et une poudre finement broyée d'un matériau contenant du calcium dont la solubilité dans l'eau est comprise environ entre 0,01 et 2g par litre.

**Patentansprüche**

1. Verfahren zur Abdichtung eines Bodens oder eines Baustoffes, z. B. eines Mörtels, eines Bindemittels oder eines Betons, durch Injektion einer ein Siliciumoxid und Natriumoxid enthaltenden Flüssigkeit, dadurch gekennzeichnet, daß der ein Siliciumoxid und Natriumoxid enthaltenden Flüssigkeit, deren $SiO_2/Na_2O$-Verhältnis zwischen 1 und 1,3 liegt, vor der Injektion ein fein zerkleinertes Pulver einer calciumhaltigen Verbindung, das eine etwa zwischen 0,01 und g/l liegende Löslichkeit in Wasser aufweist, beigemischt wird.

2. Verfahren gemäß Anspruch 1, dadurch gekennzeichnet, daß die calciumhaltige Verbindung

ein Calciumcarbonatpulver (CaCO₃-Pulver) ist, das z. B. aus einem Marmor, einem Kalkstein oder Kalkspat besteht.

3. Verfahren gemäß Anspruch 1, dadurch gekennzeichnet, daß die calciumhaltige Verbindung Kalkpulver (Ca(OH)₂-Pulver) ist.

4. Verfahren gemäß einem der Ansprüche 1 bis 3, dadurch gekennzeichnet, daß man zur Gewinnung des Pulvers der calciumhaltigen Verbindung, das der ein Siliciumoxid und Natriumoxid enthaltenden Flüssigkeit beigemischt werden soll, die zerkleinerten Teilchen unter Zusatz eines Peptisators, z. B. einer Verbindung des Typs Naphtalin, in Wasser aufschlämmt und diese Suspension in einem Absetzbecken so lange ruhen läßt, bis das an der Oberfläche schwimmende Teil nur noch Teilchen, deren Größe kleiner als die gewünschte maximale Größe ist, enthält.

5. Zur injektion in Böden oder Baustoffe, wie Mörtel, Bindemittel oder Beton, zwecks deren Abdichtung bestimmte Stoffverbindung, dadurch gekennzeichnet, daß sie in Verbindung eine ein Siliciumoxid und Natriumoxid enthaltenden Flüssigkeit mit einem SiO₂/Na₂O-Verhältnis zwischen 1 und 1,3 und ein fein zerkleinertes Pulver eines calcium-haltigen Stoffes, dessen Löslichkeit in Wasser ca. zwischen 0,01 und 2 g/l liegt, enthält.

**Claims**

1. Process for sealing a soil or a material such as a mortar, a binder or a concrete, with the aid of the injection of silica liquor, characterized in that before the injection a finely ground powder of a compound containing calcium which has a solubility in water of approximately between 0.01 and 2 g per litre is mixed with the silica liquors in which the SiO₂/Na₂O ratio is between 1 and 1.3.

2. Process according to Claim 1, characterized in that the compound containing calcium is a calcium carbonate (CaCO₃) powder consisting, for example, of a marble, a limestone or calcite.

3. Process according to Claim 1, characterized in that the compound containing calcium is lime (Ca(OH)₂) powder.

4. Process according to any one of the preceding claims, characterized in that to obtain the powder of the compound containing calcium and intended to be mixed with the silica liquor, the ground particles are suspended in water while a deflocculating agent such as a compound of naphthalene type is added thereto and that this suspension is allowed to settle in a settling vessel for a sufficient time for the supernatent part to contain only particles of a size smaller than the desired maximum size.

5. Composition intended to be injected into soils or materials such as mortars, binders, or concretes with the objective of sealing them, characterized in that it contains as a combination a silica liquor in which the SiO₂/Na₂O ratio is between 1 and 1.3 and a finely ground powder of a material containing calcium whose solubility in water is approximately between 0.01 and 2 g per litre.